# EUROPÄISCHE PATENTSCHRIFT

(11) **EP 3 942 777 B1**
(45) Veröffentlichungstag und Bekanntmachung des Hinweises auf die Patenterteilung: **22.02.2023**
(21) Anmeldenummer: 19726919.4
(22) Anmeldetag: 06.05.2019
(51) Int. Cl.: H04L 67/55, H04L 67/12

(54) **KONFIGURIEREN EINES KOMMUNIKATIONSNETZWERKS FÜR DAS ZYKLISCHE ÜBERTRAGEN VON NACHRICHTEN**
CONFIGURING A COMMUNICATIONS NETWORK FOR THE CYCLICAL TRANSMISSION OF MESSAGES
CONFIGURATION D'UN RÉSEAU DE COMMUNICATION POUR LA TRANSMISSION CYCLIQUE DE MESSAGES

(43) Veröffentlichungstag der Anmeldung: 26.01.2022
(73) Patentinhaber: Siemens Aktiengesellschaft, 80333 München (DE)
(72) Erfinder: FISCHER, Thomas, 91056 Erlangen (DE); HÖME, Stephan, 91126 Schwabach (DE); JUNG, Konstantin, 90537 Feucht (DE); KERSCHBAUM, Sven, 90768 Fürth (DE); KIESSLING, Marcel, 91235 Velden (DE); VOLKMANN, Frank, 90475 Nürnberg (DE)
(86) Internationale Anmeldenummer: PCT/EP2019/061506
(87) Internationale Veröffentlichungsnummer: WO 2020/224753

(56) Entgegenhaltungen:
- EP-A1- 2 355 403
- Opc Fopundation: "OPC Unified Architecture Specification Part 14: PubSub Release 1.04", , 6. Februar 2018 (2018-02-06), XP055522628, Gefunden im Internet: URL:https://opcfoundation.org/developer-to ols/specifications-unified-architecture/pa rt-14-pubsub [gefunden am 2018-11-09]
- GUTIERREZ MARINA ET AL: "Self-configuration of IEEE 802.1 TSN networks", 2017 22ND IEEE INTERNATIONAL CONFERENCE ON EMERGING TECHNOLOGIES AND FACTORY AUTOMATION (ETFA), IEEE, 12. September 2017 (2017-09-12), Seiten 1-8, XP033292931, DOI: 10.1109/ETFA.2017.8247597 [gefunden am 2018-01-04]

## Beschreibung

Die Erfindung betrifft ein Verfahren zum Konfigurieren eines industriellen Echtzeit-fähigen Kommunikationsnetzwerks für das zyklische Übertragen von Nachrichten.

Bei industriellen Kommunikationsnetzwerken ist man bestrebt, dieses bei der Übertragung von Daten möglichst wenig zu belasten. Dies soll insbesondere dadurch erreicht werden, dass unnötige Daten erst gar nicht über das Kommunikationsnetzwerk übertragen werden. Nur dadurch können eine angestrebte Echtzeit-Fähigkeit und die Einhaltung von damit verbundenen Kriterien zuverlässig erreicht werden.

Die in industriellen Kommunikationsnetzwerken verwendete Kommunikation über den Standard OPC UA PubSub Part 14 (Open Platform Communications Unified Architecture Publish/Subscribe) wirkt diesem Bestreben jedoch entgegen. Ein typisches industrielles Kommunikationsnetzwerk umfasst eine Nachrichtenquelle als Sender, zumindest eine Nachrichtensenke als Empfänger und zumindest eine Netzwerkkomponente als jeweiliges Verbindungselement zwischen Sender und Empfänger(n). Bei einer Kommunikation über OPC UA PubSub werden auf Seiten der Nachrichtenquelle (sog. Publisher) Daten aus einem Modell entnommen, in jeweilige Gruppen des Modells verpackt und als Nachrichten (sog. Netzwerknachrichten oder Network Messages) versendet. Eine jeweilige Nachrichtensenke (sog. Subscriber) nimmt die Nachrichten entgegen und überprüft, welche der Gruppen von ihm abonniert wurden und verwendet die entsprechende Information aus den Nachrichten. Gruppen, die für eine betreffende Nachrichtensenke nicht relevant sind, werden von der Nachrichtensenke beim Empfang der Nachricht verworfen. Eine Belastung der Nachrichtensenke wird somit durch das Verwerfen von nicht benötigten Gruppen reduziert.

Allerdings wird das Kommunikationsnetzwerk durch die unnötige Übertragung nicht benötigter Informationen belastet. Diese Mehrbelastung wurde bislang auf Kosten des Kommunikationsnetzwerks akzeptiert, was jedoch deren Kosten in die Höhe treibt und negative Auswirkung auf die Echtzeit-Fähigkeit der Datenübertragung im Hinblick auf Latenzzeiten und/oder Jitter hat.

Aus der EP 2 355 403 ist bereits ein Verfahren zum Verteilen von Daten mittels Multicast bekannt, wobei die Empfänger und Sender ihre Daten per Publication/Subscribe Mechanismus verteilen. Datenpakete können dabei anhand von vorhandener Topologie-Information im Netz gefiltert werden.

Es ist Aufgabe der Erfindung, ein Verfahren zum Konfigurieren eines industriellen, Echtzeit-fähigen Kommunikationsnetzwerks für das Übertragen von Nachrichten sowie ein industrielles Echtzeit-fähiges Kommunikationsnetzwerk anzugeben, welche funktionell und/oder baulich derart verbessert sind, dass die Belastung des Kommunikationsnetzwerks beim zyklischen Übertragen von Nachrichten so gering wie möglich gehalten wird.

Diese Aufgaben werden gelöst durch ein Verfahren gemäß den Merkmalen des Patentanspruches 1. Vorteilhafte Ausgestaltungen ergeben sich aus den abhängigen Patentansprüchen.

Es wird ein Verfahren zum Konfigurieren eines industriellen Echtzeit-fähigen Kommunikationsnetzwerks für das zyklische Übertragen von Nachrichten vorgeschlagen. Eine jeweilige Nachricht umfasst mehrere Datensätze. Das Kommunikationsnetzwerk umfasst eine Nachrichtenquelle, zumindest eine Nachrichtensenke und zumindest eine Netzwerkkomponente als Nachrichten weiter leitende Komponente. Die Nachrichtenquelle ist dazu ausgebildet, Nachrichten zu erzeugen und diese zyklisch auszusenden. Die zumindest eine Nachrichtensenke ist dazu ausgebildet, die Nachrichten zu empfangen und zu verarbeiten. Die zumindest eine Netzwerkkomponente empfängt die Nachrichten von der Nachrichtenquelle oder einer der Netzwerkkomponenten und leitet diese an die zumindest eine Nachrichtensenke oder einer der Netzwerkkomponenten weiter.

Das Verfahren umfasst den Schritt der Bestimmung einer Netzwerktopologie des Kommunikationsnetzwerks für die Übertragung eines von der Nachrichtenquelle zukünftig auszusendenden Datenstroms, indem die Nachrichten jeweils mit allen Datensätzen zyklisch ausgesendet werden. Das Verfahren umfasst den Schritt der Ermittlung, welche der Datensätze in dem Datenstrom eine jeweilige der Nachrichtensenken empfangen (d.h. abonnieren) möchte. Ein weiterer Schritt umfasst das Bestimmen eines jeweiligen Filters für jede Netzwerkkomponente, indem aus der Netzwerktopologie die an die jeweilige Netzwerckomponente angeschlossenen Komponenten, umfassend Nachrichtensenken und/oder Netzwerkkomponenten, sowie die für die angeschlossenen Nachrichtensenken erforderlichen Datensätze ermittelt werden. Schließlich umfasst das Verfahren den Schritt des Einrichtens des jeweiligen Filters in jeder Netzwerkkomponente, wodurch im Betrieb des Kommunikationsnetzwerks in stromabwärtiger Richtung des Datenstroms eine Filterung empfangener Nachrichten erfolgt und in den Nachrichten ausschließlich die stromabwärtig erforderlichen Datensätze übertragen werden. Erforderliche Datensätze sind die von den Nachrichtensenken abonnierten Datensätze.

Das industrielles Echtzeit-fähiges Kommunikationsnetzwerk istzum zyklischen Übertragen von Nachrichten ausgebildet gemäß dem beanspruchten Verfahren. Eine jeweilige Nachricht umfasst mehrere Datensätze. Das Kommunikationsnetzwerk umfasst eine Nachrichtenquelle, die dazu ausgebildet ist, Nachrichten zu erzeugen und diese zyklisch auszusenden, zumindest eine Nachrichtensenke, die dazu ausgebildet ist, Nachrichten zu empfangen und zu verarbeiten, sowie zumindest eine Netzwerckomponente als Nachrichten weiter leitende Komponente, die die Nachrichten von der Nachrichtenquelle oder einer der Netzwerkkomponenten empfängt und an die zumindest eine Nachrichtensenke oder eine der Netzwerkkomponenten weiterleitet. Das Kommunikationsnetzwerk ist dazu ausgebildet, eine Netzwerktopologie des Kommunikationsnetzwerks für die Übertragung eines von der Nachrichtenquelle zukünftig auszusendenden Datenstroms, in dem die Nachrichten jeweils mit allen Datensätzen zyklisch ausgesendet werden, zu bestimmen. Das Kommunikationsnetzwerk ist weiter dazu ausgebildet, zu ermitteln, welche oder welchen der Datensätze in dem Datenstrom eine jeweilige der Nachrichtensenken empfangen (d.h. abonnieren) möchte. Ferner ist das Kommunikationsnetzwerk dazu ausgebildet, einen jeweiligen Filter für eine Netzwerkkomponente zu bestimmen, indem aus der Netzwerktopologie die an die jeweilige Netzwerkkomponente angeschlossenen Komponenten, umfassend Nachrichtensenken und/oder Netzwerkkomponenten, sowie die für die angeschlossenen Nachrichtensenken erforderlichen Datensätze, ermittelt werden. Schließlich ist das Kommunikationsnetzwerk dazu ausgebildet, den jeweiligen Filter in jeder Netzwerkkomponente einzurichten, wodurch im Betrieb des Kommunikationsnetzwerks in stromabwärtiger Richtung des Datenstroms in den Nachrichten eine Filterung empfangener Nachrichten erfolgt und ausschließlich die erforderlichen Datensätze übertragen werden.

Durch die vorgeschlagene Erfindung ist es möglich, unnötigen Datenverkehr frühzeitig aus dem Kommunikationsnetzwerk zu eliminieren. Um dies zu ermöglichen, wird zunächst durch die Bestimmung der Netzwerktopologie des Kommunikationsnetzwerks ein Verständnis über die Datenpfade entwickelt. Um Kenntnis über die zu übertragenden Inhalte zu haben, erfolgt die Ermittlung, welchen oder welche der Datensätze in dem Datenstrom eine jeweilige der Nachrichtensenken empfangen möchte. Die Nutzung dieser Informationen ermöglicht die Bestimmung eines jeweiligen Filters für jede in dem Kommunikationsnetzwerk vorhandene Netzwerkkomponente, so dass ein Teil der in den Nachrichten enthaltenen Datensätzen mit hoher Wahrscheinlichkeit von den Filtern aus dem Datenstrom ausgefiltert werden kann, wodurch die Belastung des Kommunikationsnetzwerks reduziert werden kann. Es erfolgt somit ein verteiltes Filtern applikativer Dateninformationen auf Transportebene. Dabei entsteht keine Einschränkung in dem Kommunikationsnetzwerk, wie sie in einer Verletzung einer Schichtentrennung (Layer-Trennung) zu erwarten wäre.

Die vorgeschlagene Filtermethodik lässt sich auf einfache Weise in industriellen Kommunikationsnetzwerken umsetzen, da gegenüber heutigen Standards lediglich der Filtermechanismus in den Netzwerkkomponenten hinzugefügt werden muss. Da es sich hierbei um eine applikative Erweiterung handelt, ist der gesamte restliche Netzwerkverkehr innerhalb des Kommunikationsnetzwerks von der Erweiterung unbeeinflusst. Die Datenströme bilden dabei eine natürliche Abschirmung zwischen der Kommunikation unterschiedlicher Applikationen.

Insbesondere basiert das Kommunikationsnetzwerk auf dem Standard OPC UA PubSub. Dementsprechend ist die Nachrichtenquelle dazu ausgebildet, die Nachrichten gemäß dem Standard OPC UA PubSub zu erzeugen. Bei einer Kommunikation über OPC UA PubSub werden von der Nachrichtenquelle Daten aus einem Modell entnommen, in jeweilige Datensätze verpackt und über die Nachrichten versendet. Die Nachrichtensenken nehmen die Nachrichten entgegen und überprüfen die von ihnen abonnierten Datensätze. Da von den Nachrichtensenken nicht abonnierte Datensätze in der Netzwerkkomponente bereits ausgefiltert werden, entfällt das Verwerfen der nicht abonnierten Datensätze in den Nachrichtensenken, wodurch sich neben einer reduzierten Netzwerkbelastung auch eine reduzierte Belastung der Nachrichtensenken ergibt.

Die Bestimmung der Netzwerktopologie basiert vorzugsweise auf dem IEEE 802.1 Standard TSN (Time Sensitive Network). TSN setzt voraus, dass das Kommunikationsnetzwerk ein Verständnis der Datenpfade hat, da diese im Rahmen von TSN selbst ermittelt werden. Der Schritt der Bestimmung der Netzwerktopologie kann somit durch die bekannten Mechanismen von TSN realisiert werden. Allerdings hat TSN kein Verständnis über den Inhalt der Nachrichten und über die über die Datenpfade übertragenen Daten. Durch die Kombination von TSN mit den Mechanismen von OPC UA PubSub kann damit ein Filtermechanismus realisiert werden, welcher einmalig festgelegte dynamische Pfade für in den Nachrichten enthaltene Inhalte ermöglicht.

Eine weitere zweckmäßige Ausgestaltung sieht vor, dass jeder Datensatz in der Nachricht mit einem Datensatz-Kennzeichner, einer sog. Dataset WriterID, versehen ist, wobei der Datensatz-Kennzeichner in den Filtern als Filterkriterium verarbeitet wird. Die Datensatz-Kennzeichner können somit dazu verwendet werden, um die Datensätze auf dem Datenpfad weiterzuleiten, die für eine betreffende Nachrichtensenke von Bedeutung sind, d.h. von dieser abonniert wurden. Die Filterung der Datensatz-Kennzeichner kann auf einfache Weise realisiert werden, da der Datensatz-Kennzeichner ein Wert mit n Bits, z.B. n = 16, ist. Die Filterung kann daher wahlweise durch ein in Software oder in Hardware realisiertes Filter erfolgen.

Es ist weiterhin zweckmäßig, wenn der Filter jeder Netzwerckomponente ausschließlich abhängig von den für die angeschlossenen Nachrichtensenken erforderlichen Datensätzen konfiguriert wird. Die Konfiguration umfasst hierbei das Bestimmen und Einrichten eines jeweiligen Filters.

Es ist zudem zweckmäßig, wenn der Filter jeder Netzwerkkomponente zusätzlich abhängig von den in stromabwärtiger Richtung des Datenstroms angeschlossenen Netzwerkkomponenten und den für die daran angeschlossenen Nachrichtensenken erforderlichen Datensätze konfiguriert wird. Hierzu können beispielsweise die Netzwerkkomponenten untereinander Daten austauschen, indem beispielsweise von einem jeweiligen Subscriber ein Pfad zurück in Richtung der Nachrichtenquelle durchlaufen wird, um festzustellen, welche Datensätze für den betreffenden Subscriber bzw. sämtliche stromabwärts einer betreffenden Netzwerkkomponente vorgesehenen Subscriber erforderlich sind. Dieses Vorgehen ermöglicht eine besonders starke Reduktion der Netzwerkbelastung.

Es ist weiterhin zweckmäßig, wenn das Bestimmen und das Einrichten des jeweiligen Filters einmalig vor dem Aufsetzen und Aussenden des Datenstroms erfolgt. Dadurch werden einmalig dynamisch geplante Pfade bezüglich der von einer jeweiligen Nachrichtensenke abonnierten Datensätze und der Nachrichtenquelle definiert.

Gemäß einer weiteren zweckmäßigen Ausgestaltung wird das Bestimmen und das Einrichten des jeweiligen Filters durch eine übergeordnete Recheneinheit durchgeführt, die von den Nachrichtensenken die Information erhält oder abfragt, welchen oder welche der Datensätze in dem Datenstrom eine jeweilige der Nachrichtensenken empfangen (d.h. abonnieren) möchte. Alternativ kann das Bestimmen und das Einrichten des jeweiligen Filters durch eine jeweilige Netzwerkkomponente durchgeführt werden, die von den Nachrichtensenken die Information erhält oder abfragt, welchen oder welche der Datensätze in dem Datenstrom eine jeweilige der Nachrichtensenken empfangen (d.h. abonnieren) möchte. Insbesondere erhält oder fragt eine jeweilige Netzwerkkomponente von den in stromabwärtiger Richtung des Datenstroms angeschlossenen Netzwerkkomponenten die Informationen ab, welchen oder welche der Datensätze in dem Datenstrom benötigt werden. Dies entspricht dem oben bereits erwähnten Pfaddurchlaufen von hinten in Richtung der Nachrichtenquelle.

Von der Erfindung ist ferner ein Verfahren zum zyklischen Übertragen von Nachrichten in einem erfindungsgemäß konfigurierten Kommunikationsnetzwerk umfasst.

Es wird ferner ein Computerprogrammprodukt vorgeschlagen, das direkt in den internen Speicher eines digitalen Computers geladen werden kann und Softwarecodeabschnitte umfasst, mit denen die Schritte des hierin beschriebenen Verfahrens ausgeführt werden, wenn das Produkt auf dem Computer läuft. Das Computerprogrammprodukt kann in Gestalt eines physikalischen Speichermediums, z.B. eines USB-Speichersticks, einer DVD, einer CD-ROM, eines Flash-Speichers und dergleichen, verkörpert sein. Ebenso kann das Computerprogrammprodukt in Gestalt eines über ein drahtloses oder leitungsgebundenes Netzwerk ladbares Signal ausgebildet sein.

Das bereits beschriebene industrielle Echtzeit-fähige Kommunikationsnetzwerk kann darüber hinaus weitere Mittel umfassen, welche die Ausführung von zweckmäßigen oder bevorzugten Ausgestaltungsformen des erfindungsgemäßen Verfahrens einzeln oder in beliebiger Kombination erlauben.

Die Erfindung wird nachfolgend näher anhand der Beschreibung eines Ausführungsbeispiels in der Zeichnung erläutert. Es zeigen:
- Fig. 1: eine schematische Darstellung eines industriellen Kommunikationsnetzwerks, in dem eine herkömmliche Übertragung eines Datenstroms erfolgt;
- Fig. 2: eine schematische Darstellung des in Fig. 1 gezeigten industriellen Kommunikationsnetzwerks, in dem eine Übertragung eines Datenstroms gemäß einer ersten Ausgestaltungsvariante des erfindungsgemäßen Verfahrens erfolgt;
- Fig. 3: eine schematische Darstellung des in Fig. 1 gezeigten industriellen Kommunikationsnetzwerks, in dem eine Übertragung eines Datenstroms gemäß einer zweiten Ausgestaltungsvariante des erfindungsgemäßen Verfahrens erfolgt; und
- Fig. 4: einen Ablaufplan, der die Durchführung der Schritte des erfindungsgemäßen Verfahrens illustriert.

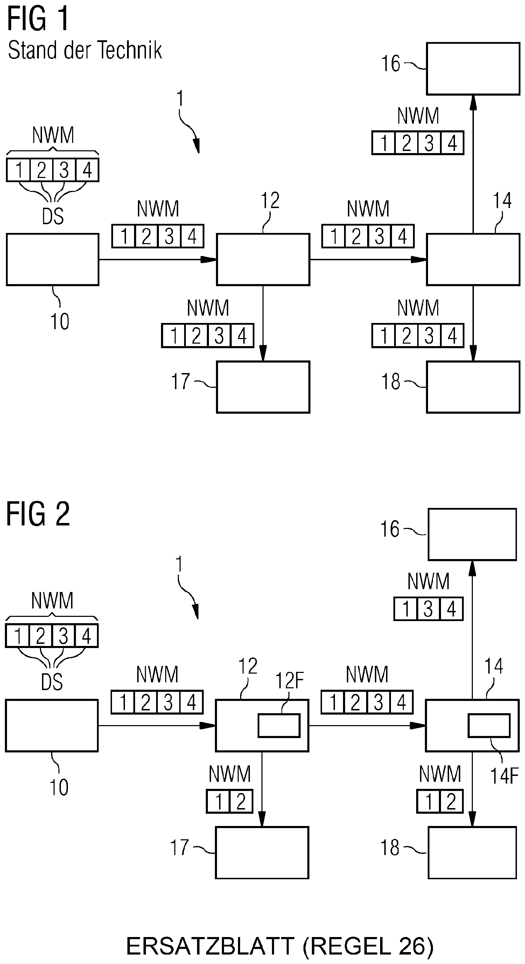

Fig. 1 zeigt eine schematische Darstellung eines beispielhaften, einfachen industriellen Echtzeit-fähigen Kommunikationsnetzwerks 1. In dem in Fig. 1 gezeigten Kommunikationsnetzwerk 1 werden zyklische übertragene Nachrichten NWM in herkömmlicher Weise von einem Sender an Empfänger übertragen.

Das Kommunikationsnetzwerk 1 umfasst als Sender eine Nachrichtenquelle 10, die auch als Publisher bezeichnet wird. Die Nachrichtenquelle 10 ist dazu ausgebildet, Nachrichten NWM zu erzeugen und zyklisch auszusenden. Jede von der Nachrichtenquelle 10 ausgesendete Nachricht NWM umfasst eine Anzahl an Datensätzen DS. Das zyklische Aussenden einer Mehrzahl an Nachrichten NWM wird als Datenstrom bezeichnet. Die Anzahl an Datensätzen DS in einer Nachricht NWM kann grundsätzlich beliebig, d.h. 1 oder größer, sein. Im vorliegenden Ausführungsbeispiel wird davon ausgegangen, dass eine jeweilige Nachricht NWM vier unterschiedliche Datensätze "1", "2", "3" und "4" umfasst, die der Einfachheit halber nachfolgend als DS1, ..., DS4 bezeichnet werden.

Das Kommunikationsnetzwerk 1 umfasst als Empfänger der Nachrichten NWM beispielhaft drei Nachrichtensenken 16, 17, 18, die auch als Subscriber bezeichnet werden. Die Anzahl der Nachrichtensenken kann auch größer oder kleiner als drei sein. Die Nachrichtensenken 16, 17, 18 sind dazu ausgebildet, die Nachrichten NWM zu empfangen und die in den Nachrichten NWM enthaltenen Datensätze DS oder auch nur einen Teil der Datensätze DS zu verarbeiten. Die Nachrichtensenken 16, 17, 18 sind nicht unmittelbar mit der Nachrichtenquelle 10 verbunden. Vielmehr ist eine Anzahl an Netzwerkkomponenten 12, 14 als Vermittlungs- oder Weiterleitungskomponente vorgesehen, die in dem Kommunikationsnetzwerk 1 die Nachrichtenquelle 10 und die Nachrichtensenken 16, 17, 18 verbindet. Die Netzwerkkomponenten 12, 14 sind z.B. Bridges. Über die Netzwerkkomponenten 12, 14 werden dann die Nachrichten NWM entlang vorbestimmter Pfade der Verschaltung zu den Nachrichtensenken 16, 17, 18 transportiert.

Im vorliegenden Ausführungsbeispiel sind lediglich zwei Netzwerkkomponenten 12, 14 dargestellt, wobei die Anzahl auch größer oder kleiner als zwei sein kann. In der hier lediglich beispielhaft gezeigten Topologie ist die Netzwerkkomponente 12 mit der Nachrichtenquelle 10 verbunden. In stromabwärtiger Richtung des von der Nachrichtenquelle 10 ausgehenden Datenflusses sind mit der Netzwerkkomponente 12 ferner die Netzwerkkomponente 14 und die Nachrichtensenke 17 verbunden. Mit der Netzwerkkomponente 14 sind in stromabwärtiger Richtung wiederum die Nachrichtensenken 16, 18 verbunden.

Das zyklische Übertragen der Nachrichten NWM in dem Kommunikationsnetzwerk 1 erfolgt in einer Kommunikation gemäß dem Standard OPC UA PubSub. Hierbei werden die Datensätze DS1, ..., DS4 gemäß einem nicht gezeigten Modell durch die Nachrichtenquelle 10 ermittelt, in die Nachricht NWM verpackt und als Datenstrom, d.h. als zyklische Folge von Nachrichten NWM mit allen Datensätzen DS1, ..., DS4, ausgesendet. Die Nachrichten NWM werden in zyklischer Abfolge von der Nachrichtenquelle 10 als Broadcast-Nachrichten an die Netzwerkkomponente 12 übertragen. Die Netzwerkkomponente 12 überträgt die Nachrichten NWM ihrerseits an die Netzwerkkomponente 14 sowie die unmittelbar mit ihr verbundene Nachrichtensenke 17. Die Netzwerckomponente 14 überträgt die Nachrichten NWM wiederum an die Nachrichtensenken 16, 18.

Wie aus der Darstellung gemäß Fig. 1 hervorgeht, in der der Inhalt der Nachrichten NWM am Ausgang jeder Komponente bis zum Empfänger dargestellt ist, werden die Nachrichten NWM unverändert von den Netzwerkkomponenten 12, 14 an die an die angeschlossenen Nachrichtensenken 16, 17, 18 weitergeleitet. Die Nachrichtensenken 16, 17, 18 nehmen die Nachrichten NWM entgegen und überprüfen, welche Datensätze DS von ihnen abonniert sind, d.h. empfangen werden sollen. Im Ausführungsbeispiel gemäß Fig. 1 hat die Datensenke 16 beispielsweise die Datensätze DS1, DS3, DS4 abonniert. Die Datensenke 17 hat die Datensätze DS1, DS2 und die Datensenke 18 die Datensätze DS1, DS2 abonniert. In der jeweiligen Datensenke 16, 17, 18 werden dann die jeweils nicht abonnierten Datensätze verworfen. Dies bedeutet, die Nachrichtensenke 16 verwirft den Datensatz 2 und die Nachrichtensenken 17, 18 verwerfen die Datensätze 3 und 4.

Es ist ohne weiteres ersichtlich, dass hierbei, unabhängig von den von den Nachrichtensenken 16, 17, 18 verarbeiteten Datensätzen, das Kommunikationsnetzwerk 1 mit einer hohen Datenlast beaufschlagt ist.

Fig. 2 zeigt das erfindungsgemäße Vorgehen, das das zyklische Übertragen der Nachrichten NWM mit reduzierter Last erlaubt. Die Topologie entspricht dabei der in Verbindung mit Fig. 1 beschriebenen Topologie.

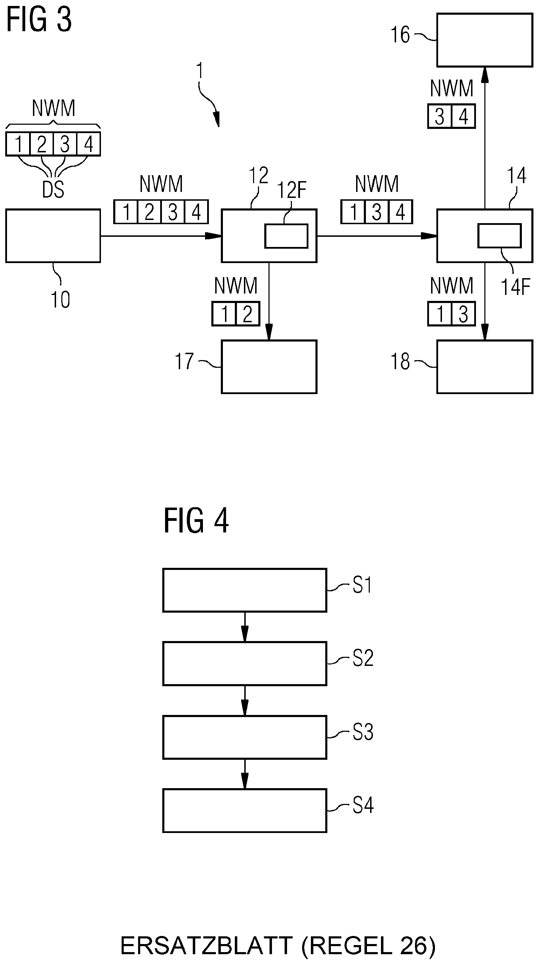

Auch das in Fig. 2 gezeigte Kommunikationsnetzwerk 1 verwendet eine Kommunikation über OPC UA PubSub, d.h. die Nachrichtenquelle 10 sendet in zyklischer Abfolge Nachrichten NWM mit den darin enthaltenen Datensätzen DS1, ..., DS4 aus. Um die Netzwerklast zu reduzieren, erfolgt einmalig eine Bestimmung der Netzwerktopologie des Kommunikationsnetzwerks 1 (Schritt S1 in Fig. 4) für die Übertragung des von der Nachrichtenquelle 10 auszusendenden Datenstroms. Es wird somit in diesem ersten Schritt ein Verständnis über die Datenpfade des Kommunikationsnetzwerks ermittelt, indem die physikalische Anordnung der über ein Übertragungsmedium (Leitung oder drahtlose Kommunikationsverbindung) miteinander verbundenen Komponenten, nämlich der Nachrichtenquelle 10, der zumindest einen Netzwerkkomponente 12, 14 und der zumindest einen Nachrichtensenke 16, 17, 18, ermittelt wird. Die Bestimmung der Netzwerktopologie kann auf dem Standard TSN (Time Sensitive Network) basieren.

In einem nächsten Schritt S2 (Fig. 4) wird ermittelt, welchen oder welche der Datensätze DS1, ..., DS4 in dem Datenstrom eine jeweilige der Nachrichtensenken 16, 17, 18 empfangen möchte, d.h. abonniert hat. Es wird somit in diesem zweiten Schritt ein Verständnis über die von den Nachrichtensenken benötigten Inhalte ermittelt. In dem in Fig. 2 gezeigten Ausführungsbeispiel wird davon ausgegangen, dass die Nachrichtensenke 16 die Datensätze DS1, DS3 und DS4 und die Nachrichtensenken 17, 18 die Datensätze DS1, DS2 abonniert haben.

Die Schritte S1 und S2 können von einer nicht dargestellten, übergeordneten Recheneinheit einmalig bzw. nach jeder Änderung der Netzwerktopologie, aufgrund des Hinzufügens oder Entfernens von Komponenten, durchgeführt werden. Die übergeordnete Recheneinheit kann im Rahmen des Schritts S2 beispielsweise die von den Nachrichtensenken 16, 17, 18 benötigten (d.h. abonnierten) Datensätze aktiv abfragen oder die Information von diesen im Rahmen eines Initiationsschritts erhalten. Alternativ können die Informationen, welche Datensätze DS1, ..., DS4 von einer jeweiligen Nachrichtensenke 16, 17, 18 empfangen werden sollen, von entsprechenden Recheneinheiten der Netzwerkkomponenten 12, 14 abgefragt oder erhalten werden.

Ist damit neben dem Verständnis der Datenpfade bekannt, in welchem Umfang Informationen von den Nachrichtensenken 16, 17, 18 benötigt werden, so kann in einem Schritt S3 (Fig. 4) ein jeweiliges Filterkriterium bzw. Filter 12F, 14F für jede die Nachrichten weiterleitende Komponente bestimmt werden. Nachrichten weiterleitende Komponenten sind die Netzwerkkomponenten 12, 14. Hierbei werden aus der Netzwerktopologie die an die jeweilige Netzwerkkomponente 12, 14 stromabwärts angeschlossenen Komponenten, umfassend Nachrichtensenken 16, 17, 18 und/oder Netzwerkkomponenten 14, sowie die für die angeschlossenen Nachrichtensenken 16, 17, 18 erforderlichen Datensätze DS1, ..., DS4 ermittelt.

In Schritt S3 wird somit als Filterkriterium für das Filter 12F ermittelt, gemäß dem die Netzwerkkomponente 12 an die unmittelbar an sie angeschlossene Nachrichtensenke 17 lediglich die Datensätze DS1, DS2 weiterzuleiten braucht. Eine Übertragung der von der Nachrichtensenke 17 nicht benötigten Datensätze DS3, DS4 ist seitens der Netzwerkkomponente 12 demgegenüber nicht erforderlich. Die Nachricht NWM an die Nachrichtensenke 17 braucht somit nur noch die Datensätze DS1, DS2 zu umfassen. Demgegenüber muss die Netzwerkkomponente 12 entsprechend der Schnittmenge aller benötigten Datensätze DS der stromabwärts angeschlossenen Komponenten im vorliegenden Ausführungsbeispiel die Nachricht NWM mit allen Datensätzen DS1, ..., DS4 an die Netzwerkkomponente 14 übertragen. Als Filterkriterium für das Filter 14F der Netzwerkkomponente 14 wird bestimmt, dass die Nachrichtensenke 16 lediglich die Datensätze DS1, DS3, DS4 und die Nachrichtensenke 18 die Datensätze DS1, DS2 benötigt. Die Nachricht NWM an die Nachrichtensenke 16 braucht somit nur noch die Datensätze DS1, DS2, DS3 zu umfassen. Die Nachricht NWM an die Nachrichtensenke 18 braucht nur die Datensätze DS1, DS2 zu umfassen.

In einem Schritt S4 (Fig. 4) erfolgt dann die Einrichtung des jeweiligen Filters 12F, 14F in der zugeordneten Netzwerkkomponente 12, 14. Dies bedeutet, in der Netzwerkkomponente 12 wird das Filter 12F, in der Netzwerkkomponente 14 das Filter 14F eingerichtet. Dadurch können im Betrieb des Kommunikationsnetzwerks 1 in stromabwärtiger Richtung des Datenstroms in den Nachrichten NWM ausschließlich die erforderlichen Datensätze übertragen werden.

Die Filterung der Nachrichten NWM durch die Filter 12F, 14F kann auf einfache Weise mit einem Datensatz-Kennzeichner (nicht explizit dargestellt) erfolgen. Hierzu wird jeder Datensatz DS1, ..., DS4 in der Nachricht NWM mit einem Datensatz-Kennzeichner versehen. Der Datensatz-Kennzeichner wird dann in den Filtern 12F, 14F als Filterkriterium verarbeitet. Die Filter 12F, 14F können wahlweise in Software oder in Hardware realisiert sein. Eine Realisierung in Hardware ist insbesondere dann auf einfache Weise möglich, wenn als Filterkriterium die bereits erwähnten Datensatz-Kennzeichner realisiert werden.

In dem in Fig. 2 gezeigten Ausgestaltungsbeispiel wird das Filter 12F, 14F jeder Netzwerkkomponente 12, 14 ausschließlich abhängig von den für die angeschlossenen Nachrichtensenken 16, 17, 18 erforderlichen Datensätzen konfiguriert. Die Konfiguration umfasst hierbei das Bestimmen und Einrichten eines jeweiligen Filters. Aus dem oben beschriebenen Ausführungsbeispiel ergibt sich, dass die Netzwerkkomponente 12 die von der Nachrichtenquelle 10 empfangene Nachricht an die Netzwerkkomponente 14 unverändert überträgt, d.h. die Nachricht NWM umfasst sämtliche Datensätze DS1, ..., DS4.

Fig. 3 zeigt ein auf der gleichen Netzwerktopologie basierendes Ausführungsbeispiel, in dem die Filter 12F, 14F der Netzwerkkomponenten 12, 14 entsprechend den von den Nachrichtensenken 16, 17, 18 abonnierten Datensätze konfiguriert ist. Zur Verdeutlichung dieses Beispiels wird davon ausgegangen, dass im Unterschied zu Fig. 2 die Nachrichtensenke 16 die Datensätze DS3, DS4 und die Nachrichtensenke 18 die Datensätze DS1, DS3 abonniert hat. Die Netzwerkkomponente 14 hat damit keine Komponente in stromabwärtiger Richtung angeschlossen, welche den Datensatz DS2 verarbeitet (abonniert hat). Die Netzwerkkomponente 14 kann im Rahmen des Schrittes S2, in dem ermittelt wird, welchen oder welche der Datensätze in dem Datenstrom eine jeweilige der Nachrichtensenken empfangen möchte, an die Netzwerkkomponente 12 die Information übermitteln, dass der Datensatz DS2 nicht benötigt wird. Die Netzwerkkomponente 12 überträgt daraufhin an die Netzwerkkomponente 14 eine Nachricht NWM, in der lediglich noch die Datensätze DS1, DS3, DS4, nicht jedoch der Datensatz DS2 erhalten, ist. Hieraus ergibt sich eine weitere Reduktion der Netzwerklast.

Das beschriebene Vorgehen sieht das verteilte Filtern applikativer Dateninformationen auf Transportebene vor. Verteiltes Filtern deshalb, da die Filter in den unterschiedlichen Netzwerkkomponenten mit unterschiedlichen Filterkonfigurationen vorgesehen sind. Dies widerspricht im strengen Sinne der Separierung der Netzwerk-Schicht (Layer). Im Sinne der Erfindung wird dieser Vorstoß in vorteilhafter Weise in Kauf genommen, um die gesamte Netzwerklast signifikant zu senken. Dabei entsteht keine Einschränkung in dem Kommunikationsnetzwerk, wie sie in einer Verletzung bei Schichtentrennung zu erwarten wäre.

Gegenüber heutigen Standards muss einzig zu den Datensätzen DS1, ..., DS4 ein jeweiliger Datensatz-Kennzeichner hinzugefügt werden, welcher dann in den Filtern 12F, 14F verarbeitet werden kann.

Da es sich um eine applikative Erweiterung in den Netzwerckomponenten 12, 14 handelt, ist der gesamte restliche Netzwerkverkehr in dem Kommunikationsnetzwerk unbeeinflusst. Datenströme bilden dabei eine natürliche Abschirmung zwischen einer Kommunikation unterschiedlicher Applikationen.

### Bezugszeichenliste

- 1: Kommunikationsnetzwerk
- 10: Nachrichtenquelle
- 12: Netzwerkkomponente
- 12F: Filter
- 14: Netzwerkkomponente
- 14F: Filter
- 16: Nachrichtensenke
- 17: Nachrichtensenke
- 18: Nachrichtensenke
- NWM: Nachrichten
- DS1, ..., DS4: Datensatz

## Patentansprüche

1. Verfahren zum Konfigurieren eines industriellen Echtzeit-fähigen Kommunikationsnetzwerks für das zyklische Übertragen von Nachrichten (NWM), wobei eine jeweilige Nachricht (NWM) mehrere Datensätze (DS1, ..., DS4) umfasst, und wobei das Kommunikationsnetzwerk (1)
- eine Nachrichtenquelle (10), die dazu ausgebildet ist, Nachrichten (NWM) zu erzeugen und diese zyklisch auszusenden;
- zumindest eine Nachrichtensenke (16, 17, 18), die dazu ausgebildet ist, die Nachrichten (NWM) zu empfangen und zu verarbeiten;
- zumindest eine Netzwerkkomponente (12, 14), die die Nachrichten von der Nachrichtenquelle (10) oder einer der Netzwerkkomponenten (12) empfängt und an die zumindest eine Nachrichtensenke (16, 17, 18) oder eine der Netzwerkkomponenten (14) weiterleitet;
umfasst, mit den Schritten:
- Bestimmung (S1) einer Netzwerktopologie des Kommunikationsnetzwerks (1) für die Übertragung eines von der Nachrichtenquelle (10) zukünftig auszusendenden Datenstroms, in dem die Nachrichten (NWM) jeweils mit allen Datensätzen (DS1, ..., DS4) zyklisch ausgesendet werden;
- Ermittlung (S2), welchen oder welche der Datensätze (DS1,..., DS4) in dem Datenstrom eine jeweilige der Nachrichtensenken (16, 17, 18) empfangen möchte;
- Bestimmen (S3) eines jeweiligen Filters (12F, 14F) für jede Netzwerkkomponente (12, 14), indem aus der Netzwerktopologie die an die jeweilige Netzwerkkomponente (12, 14) angeschlossenen Komponenten, umfassend Nachrichtensenken (16, 17, 18) und/oder Netzwerkkomponenten (14), sowie die für die angeschlossenen Nachrichtensenken (16, 17, 18) erforderlichen Datensätze (DS1, ..., DS4) ermittelt werden;
- Einrichten (S4) des jeweiligen Filters (12F, 14F) in jeder Netzwerkkomponente (12, 14), wodurch im Betrieb des Kommunikationsnetzwerks (1) in stromabwärtiger Richtung des Datenstroms in den Nachrichten (NWM) eine Filterung empfangener Nachrichten erfolgt und ausschließlich die erforderlichen Datensätze (DS1, ..., DS4) übertragen werden.

2. Verfahren nach Anspruch 1, bei dem das Kommunikationsnetzwerk (1) auf dem Standard OPC UA PubSub basiert.

3. Verfahren nach Anspruch 1 oder 2, bei dem die Bestimmung der Netzwerktopologie auf dem Standard TSN basiert.

4. Verfahren nach einem der vorhergehenden Ansprüche, bei dem jeder Datensatz (DS1, ..., DS4) in der Nachricht mit einen Datensatz-Kennzeichner versehen ist, wobei der Datensatz-Kennzeichner in den Filtern (12F, 14F) als Filterkriterium verarbeitet wird.

5. Verfahren nach einem der vorhergehenden Ansprüche, bei dem der Filter (12F, 14F) jeder Netzwerkkomponente (12, 14) abhängig von den für die direkt angeschlossenen Nachrichtensenken (16, 17, 18) erforderlichen Datensätze (DS1, ..., DS4) konfiguriert wird.

6. Verfahren nach Anspruch 5, bei dem der Filter (12F, 14F) jeder Netzwerkkomponente (12, 14) zusätzlich abhängig von den in stromabwärtiger Richtung des Datenstroms indirekt angeschlossenen Netzwerkkomponenten (14) und den für die daran angeschlossenen Nachrichtensenken (16, 17, 18) erforderlichen Datensätze (DS1, ..., DS4) konfiguriert wird.

7. Verfahren nach einem der vorhergehenden Ansprüche, bei dem das Bestimmen und das Einrichten des jeweiligen Filters (12F, 14F) einmalig vor dem Aufsetzen und Aussenden des Datenstroms erfolgt.

8. Verfahren nach einem der Ansprüche 1 bis 7, bei dem das Bestimmen und das Einrichten des jeweiligen Filters (12F, 14F) durch eine übergeordnete Recheneinheit durchgeführt wird, die von den Nachrichtensenken (16, 17, 18) die Information erhält oder abfragt, welchen oder welche der Datensätze (DS1, ..., DS4) in dem Datenstrom eine jeweilige der Nachrichtensenken (16, 17, 18) empfangen möchte.

9. Verfahren nach einem der Ansprüche 1 bis 7, bei dem das Bestimmen und das Einrichten des jeweiligen Filters (12F, 14F) durch eine jeweilige Netzwerkkomponente (12, 14) durchgeführt wird, die von den Nachrichtensenken (16, 17, 18) die Information erhält oder abfragt, welchen oder welche der Datensätze (DS1, ..., DS4) in dem Datenstrom eine jeweilige der Nachrichtensenken (16, 17, 18) empfangen möchte.

10. Verfahren nach Anspruch 9, bei dem eine jeweilige Netzwerkkomponente (12, 14) von den in stromabwärtiger Richtung des Datenstroms angeschlossenen Netzwerkkomponenten (14) die Information erhält oder abfragt, welchen oder welche der Datensätze (DS1, ..., DS4) in dem Datenstrom benötigt werden.

11. Verfahren nach einem der vorhergehenden Ansprüche, bei dem die Filterung durch ein in Software oder Hardware realisiertes Filter (12F, 14F) erfolgt.

12. Computerprogrammprodukt, das direkt in den internen Speicher eines digitalen Computers geladen werden kann und Softwarecodeabschnitte umfasst, mit denen die Schritte gemäß einem der vorhergehenden Ansprüche ausgeführt werden, wenn das Produkt auf dem Computer läuft.

## Claims

1. Method for configuring an industrial communication network with real-time capability for the cyclical transmission of messages (NWM), wherein a respective message (NWM) comprises a plurality of datasets (DS1, ..., DS4), and wherein the communication network (1) comprises
- a message source (10), which is designed to generate and to cyclically send messages (NWM);
- at least one message sink (16, 17, 18), which is designed to receive and to process the messages (NWM);
- at least one network component (12, 14), which receives the messages from the message source (10) or one of the network components (12) and forwards same to the at least one message sink (16, 17, 18) or one of the network components (14);
said method comprising the following steps:
- determining (S1) a network topology of the communication network (1) for the transmission of a data stream to be sent from the message source (10) in the future, in which the messages (NWM) are each cyclically sent with all datasets (DS1, ..., DS4) ;
- identifying (S2) which dataset or which of the datasets (DS1, ..., DS4) in the data stream a respective one of the message sinks (16, 17, 18) would like to receive;
- determining (S3) a respective filter (12F, 14F) for each network component (12, 14) by virtue of the components connected to the respective network component (12, 14), comprising message sinks (16, 17, 18) and/or network components (14), and the datasets (DS1, ..., DS4) required for the connected message sinks (16, 17, 18) being identified from the network topology;
- setting up (S4) the respective filter (12F, 14F) in each network component (12, 14), as a result of which, during operation of the communication network (1), received messages are filtered in the downstream direction of the data stream in the messages (NWM) and only the required datasets (DS1, ..., DS4) are transmitted.

2. Method according to Claim 1, in which the communication network (1) is based on the OPC UA PubSub standard.

3. Method according to Claim 1 or 2, in which the determination of the network topology is based on the TSN standard.

4. Method according to one of the preceding claims, in which each dataset (DS1, ..., DS4) in the message is provided with a dataset identifier, wherein the dataset identifier is processed in the filters (12F, 14F) as a filter criterion.

5. Method according to one of the preceding claims, in which the filter (12F, 14F) of each network component (12, 14) is configured depending on the datasets (DS1, ..., DS4) required for the directly connected message sinks (16, 17, 18).

6. Method according to Claim 5, in which the filter (12F, 14F) of each network component (12, 14) is additionally configured depending on the network components (14) indirectly connected in the downstream direction of the data stream and the datasets (DS1, ..., DS4) required for the message sinks (16, 17, 18) connected thereto.

7. Method according to one of the preceding claims, in which the respective filter (12F, 14F) is determined and set up once before the data stream is synchronized and sent.

8. Method according to one of Claims 1 to 7, in which the respective filter (12F, 14F) is determined and set up by a superordinate computation unit, which obtains or requests from the message sinks (16, 17, 18) the information regarding which dataset or which of the datasets (DS1, ..., DS4) in the data stream a respective one of the message sinks (16, 17, 18) would like to receive.

9. Method according to one of Claims 1 to 7, in which the respective filter (12F, 14F) is determined and set up by a respective network component (12, 14), which obtains or requests from the message sinks (16, 17, 18) the information regarding which dataset or which of the datasets (DS1, ..., DS4) in the data stream a respective one of the message sinks (16, 17, 18) would like to receive.

10. Method according to Claim 9, in which a respective network component (12, 14) obtains or requests from the network components (14) connected in the downstream direction of the data stream the information regarding which dataset or which of the datasets (DS1, ..., DS4) in the data stream are needed.

11. Method according to one of the preceding claims, in which the filtering is carried out by a filter (12F, 14F) implemented in software or hardware.

12. Computer program product, which can be loaded directly into the internal memory of a digital computer and comprises sections of software code, using which the steps according to one of the preceding claims are executed when the product is run on the computer.

## Revendications

1. Procédé de configuration d'un réseau de communication industriel capable de fonctionner en temps réel pour la transmission cyclique de messages (NWM), dans lequel un message respectif (NWM) comprend plusieurs ensembles de données (DS1, ..., DS4), et dans lequel le réseau de communication (1) comprend
- une source de messages (10) qui est conçue pour générer des messages (NWM) et pour les émettre de manière cyclique ;
- au moins un collecteur de messages (16, 17, 18) qui est conçu pour recevoir et traiter les messages (NWM) ;
- au moins un composant de réseau (12, 14) qui reçoit les messages à partir de la source de messages (10) ou de l'un des composants de réseau (12) et les transfère au au moins un collecteur de messages (16, 17, 18) ou à l'un des composants de réseau (14) ;
comprenant les étapes consistant à :
- déterminer (S1) une topologie de réseau du réseau de communication (1) pour la transmission d'un flux de données à émettre ultérieurement à partir de la source de messages (10), dans laquelle les messages (NWM) sont respectivement émis de manière cyclique avec tous les ensembles de données (DS1, ..., DS4) ;
- identifier (S2) celui ou ceux des ensembles de données (DS1, ..., DS4) dans le flux de données que l'un respectif des collecteurs de messages (16, 17, 18) souhaite recevoir ;
- déterminer (S3) un filtre respectif (12F, 14F) pour chaque composant de réseau (12, 14) en identifiant les composants connectés au composant de réseau respectif (12, 14) à partir de la topologie de réseau, comprenant des collecteurs de messages (16, 17, 18) et/ou des composants de réseau (14), ainsi que les ensembles de données (DS1, ..., DS4) nécessaires pour les collecteurs de messages connectés (16, 17, 18) ;
- configurer (S4) le filtre respectif (12F, 14F) dans chaque composant de réseau (12, 14), de sorte que lors du fonctionnement du réseau de communication (1) dans la direction aval du flux de données dans les messages (NWM), un filtrage des messages reçus est effectué et seuls les ensembles de données nécessaires (DS1, ..., DS4) sont transmis.

2. Procédé selon la revendication 1, dans lequel le réseau de communication (1) est basé sur la norme OPC UA PubSub.

3. Procédé selon la revendication 1 ou 2, dans lequel la détermination de la topologie de réseau est basée sur la norme TSN.

4. Procédé selon l'une quelconque des revendications précédentes, dans lequel chaque ensemble de données (DS1, ..., DS4) dans le message est muni d'un identifiant d'ensemble de données, dans lequel l'identifiant d'ensemble de données est traité comme un critère de filtre dans les filtres (12F, 14F).

5. Procédé selon l'une quelconque des revendications précédentes, dans lequel le filtre (12F, 14F) de chaque composant de réseau (12, 14) est configuré en fonction des ensembles de données (DS1, ..., DS4) nécessaires pour les collecteurs de messages directement connectés (16, 17, 18).

6. Procédé selon la revendication 5, dans lequel le filtre (12F, 14F) de chaque composant de réseau (12, 14) est en outre configuré en fonction des composants de réseau (14) connectés indirectement dans la direction aval du flux de données et des ensembles de données (DS1, ..., DS4) nécessaires pour les collecteurs de messages (16, 17, 18) connectés à ceux-ci.

7. Procédé selon l'une quelconque des revendications précédentes, dans lequel la détermination et la configuration du filtre respectif (12F, 14F) sont effectuées une seule fois avant la mise en œuvre et l'émission du flux de données.

8. Procédé selon l'une quelconque des revendications 1 à 7, dans lequel la détermination et la configuration du filtre respectif (12F, 14F) sont effectuées par une unité de calcul supérieure qui reçoit les informations provenant des collecteurs de messages (16, 17, 18) ou demande celui ou ceux des ensembles de données (DS1, ..., DS4) dans le flux de données que l'un respectif des collecteurs de messages (16, 17, 18) souhaite recevoir.

9. Procédé selon l'une quelconque des revendications 1 à 7, dans lequel la détermination et la configuration du filtre respectif (12F, 14F) sont effectuées par un composant de réseau respectif (12, 14) qui reçoit les informations provenant des collecteurs de messages (16, 17, 18) ou demande celui ou ceux des ensembles de données (DS1, ..., DS4) dans le flux de données que l'un respectif des collecteurs de messages (16, 17, 18) souhaite recevoir.

10. Procédé selon la revendication 9, dans lequel un composant de réseau respectif (12, 14) reçoit les informations provenant des composants de réseau (14) connectés dans la direction aval du flux de données, ou demande celui ou ceux des ensembles de données (DS1, ..., DS4) qui sont nécessaires dans le flux de données.

11. Procédé selon l'une des revendications précédentes, dans lequel le filtrage est effectué par un filtre (12F, 14F) réalisé en logiciel ou en matériel.

12. Produit de programme informatique qui peut être monté directement dans la mémoire interne d'un ordinateur numérique et qui comprend des parties de code logiciel pour exécuter les étapes selon l'une quelconque des revendications précédentes lorsque le produit fonctionne sur l'ordinateur.
